# FASCICULE DE BREVET EUROPEEN

(11) **EP 0 811 545 B1**
(45) Date de publication et mention de la délivrance du brevet: **14.08.2002**
(21) Numéro de dépôt: 97401165.2
(22) Date de dépôt: 27.05.1997
(51) Int. Cl.: B62D 53/08, B60P 1/16

(54) **Dispositif d'attelage entre un véhicule tracteur et un véhicule tracté destiné au transport de produits pâteux, pulvérulents ou liquides**
Kupplungsvorrichtung für ein Schleppfahrzeug und einen Anhänger zum Transport von Pasten, Pulvern oder Flüssigkeiten
Coupling for a tractor vehicle and a trailer for transporting pastes, powders or liquids

(30) Priorité: 03.06.1996 FR 9606814
(43) Date de publication de la demande: 10.12.1997
(73) Titulaire: Etablissement MAGYAR (S.A.), 21004 Dijon (FR)
(72) Inventeur: Magyar, Georges, c/o Etabl. Magyar S.A., 21004 Dijon (FR)
(74) Mandataire: Pernez, Helga

(56) Documents cités:
- DE-U- 9 013 127
- US-A- 2 821 409
- US-A- 2 953 410
- US-A- 3 181 761
- US-A- 4 988 974
- US-A- 5 211 413

## Description

Dispositif d'attelage entre un véhicule tracteur et un véhicule tracté destiné au transport de produits pâteux, pulvérulents, liquides, notamment d'une citerne tractée pour le transport de tels produits.

La présente invention concerne un dispositif d'attelage entre un véhicule tracteur et un véhicule tracté destiné au transport de produits pâteux, pulvérulents, liquides, notamment d'une citerne tractée pour le transport de tels produits.

On connaît dans l'état de la technique des dispositifs d'attelages pour la liaison entre un véhicule tracteur et une remorque.

On connaît le brevet américain US-A-2953410 formant l'état de la technique le plus proche. Il décrit un dispositif d'attelage entre un véhicule tracteur et un véhicule tracté, constitué de deux composants d'attelage formé par une sellette d'attelage solidaire du véhicule tracteur et une plaque d'attelage solidaire du véhicule tracté et comportant des moyens d'écartement pour provoquer le basculement du véhicule tracté.

Le brevet allemand DE-A-9013127 décrit également un véhicule tracté comportant un châssis muni à sa partie avant d'une plaque d'attelage basculante.

Le brevet américain US-A-3181761 décrit un autre système d'attelage de l'art antérieur.

L'objet de la présente invention est de proposer une solution efficace pour faciliter l'écoulement de matières pulvérulentes ou visqueuses sans surcoût important, et sans utilisation d'équipements lourds sur le châssis de la citerne

A cet effet, l'invention concerne plus particulièrement un véhicule tracté destiné au transport de produits pâteux, pulvérulents, liquides, notamment d'une citerne tractée pour le transport de tels produits, conforme à la revendication 1 et un dispositif d'attelage conforme à la revendication 2.

L'invention sera mieux comprise à la lecture de la description qui suit faisant référence aux. dessins annexés relatifs à des exemples non limitatifs de réalisation, où :

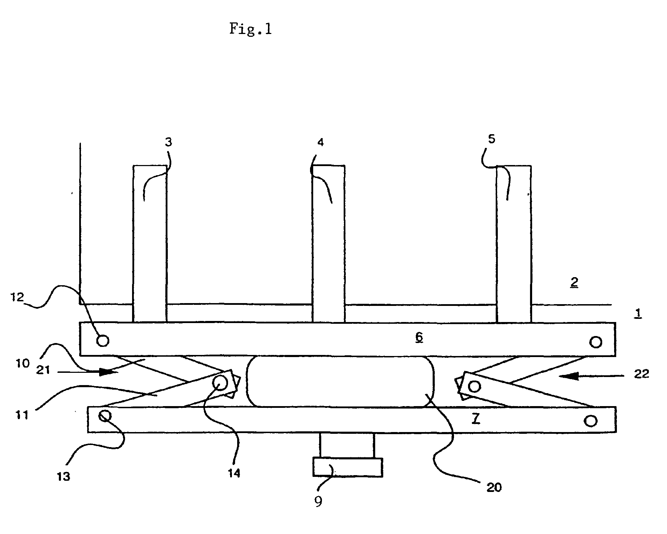

- la figure 1 représente une vue de face d'une plaque d'attelage selon l'invention.

La figure 1 représente une vue de face d'une réalisation de l'invention. Le châssis (1) du semi-remorque supporte de façon connue une citerne (2) par l'intermédiaire de berceaux (3 à 5).

La plaque d'attelage est formée de deux plaques complémentaires (6, 7) réunies par deux éléments articulés (21, 22).

La plaque inférieure (7) est munie de manière connue d'un pivot (9) venant coopérer avec une cavité complémentaire prévue dans la sellette d'attelage.

Le dispositif de basculement comporte deux éléments articulés (21, 22) disposés entre les deux plaques complémentaires (6, 7), au niveau de chacune des extrémités. Les deux plaques (6, 7) et les deux éléments articulés (21, 22) forment ainsi un ensemble déformable dans lequel les deux plaques (6, 7) peuvent occuper une pluralité de positions dans des plans toujours transversaux, c'est-à-dire contenant un axe transversal.

Le basculement relatif des plaques est réalisé à l'aide d'un coussin pneumatique (20) intercalé entre les deux plaques. La mise sous pression provoque le déplacement de la plaque supérieure (7) qui prendra une angulation fonction du basculement du châssis de la citerne.

L'invention est décrite dans ce qui précède à titre d'exemple non limitatif.

## Revendications

1. Véhicule tracté comportant une citerne et un châssis présentant à sa partie avant d'un dispositif d'attelage comportant deux plaques (6, 7) entre lesquelles est interposé un moyen pour commander le basculement du châssis **caractérisé en ce que** ledit moyen pour commander le basculement est formé par un coussin pneumatique (20) intercalé entre lesdits plaques (6, 7), lesdits plaques étant reliées par des éléments articulées (21, 22) pour permettre le basculement de la plaque supérieure (6) selon une pluralité de positions dans des plans toujours transversaux, c'est-à-dire contenant un axe transversal.

2. Dispositif d'attelage du type constituée de deux composants d'attelage complémentaires, l'un des composants étant formés par une sellette d'attelage solidaire du véhicule tracteur et l'autre composant étant solidaire du véhicule tracté, l'un desdits composants étant formé par deux plaques (6, 7) comportant des moyens d'écartement pour provoquer un basculement de la plaque supérieure (6) **caractérisé en ce que** ledit moyen d'écartement est formé par un coussin pneumatique (20) intercalé entre lesdits plaques (6, 7), lesdits plaques étant reliées par des éléments articulées (21, 22) pour permettre le basculement de la plaque supérieure (6) selon une pluralité de positions dans des plans toujours transversaux, c'est-à-dire contenant un axe transversal.

## Claims

1. Towed vehicle comprising a tank and a chassis having at its front part a coupler device comprising two plates (6,7) between which is inserted means for controlling the tipping of the chassis, **characterized in that** said means for controlling tipping is formed of an air cushion (20) inserted between said plates (6,7), said plates being joined by two articulated parts (21, 22) to enable the tipping of the upper plate (6) into a plurality of positions along planes which are always transversal, that is to say having a transversal axis.

2. Coupling device of the type made up of two complementary coupling components, one of the components being formed by a coupling chair plate integral with the towing vehicle and the other component being integral with the towed vehicle, one of said components being formed of two plates (6, 7) comprising spacer means to cause tipping of the upper plate (6), **characterized in that** said spacer means is formed of an air cushion (20) inserted between said plates (6, 7), said plates being connected by articulated parts (21, 22) to allow tipping of the upper plate (6) into a plurality of positions along planes that are always transversal, that is to say having a transversal axis.

## Patentansprüche

1. Anhängefahrzeug mit einem Behälter und einem Chassis, das im vorderen Teil eine Anhängevorrichtung mit zwei Platten (6, 7) aufweist, zwischen denen sich ein Mittel zur Betätigung der Kippvorrichtung für das Chassis befindet, **dadurch gekennzeichnet, dass** das genannte Mittel zur Betätigung der Kippvorrichtung durch ein zwischen den genannten Platten (6, 7) angeordnetes Luftkissen (20) gebildet wird, wobei die genannten Platten durch gelenkige Elemente (21, 22) miteinander verbunden sind, um das Kippen der oberen Platte (6) in mehrere Stellungen zu ermöglichen, die immer auf einer querverlaufenden Ebene liegen, das heißt sie haben eine Querachse.

2. Anhängevorrichtung eines Typs bestehend aus zwei sich ergänzenden Anhängebestandteilen, von denen einer aus einem mit den Zugfahrzeug verbundenen Anhängerdrehgestell besteht, und der andere Bestandteil mit dem Anhängefahrzeug verbunden ist, wobei einer der genannten Bestandteile von zwei Platten (6, 7) gebildet wird, die Abstandsmittel aufweisen, um ein Kippen der oberen Platte (6) zu bewirken, **dadurch gekennzeichnet, dass** das genannte Abstandsmittel aus einem Luftkissen (20) besteht, das zwischen den genannten Platten (6, 7) angeordnet ist, wobei die genannten Platten durch gelenkige Elemente (21, 22) miteinander verbunden sind, um das Kippen der oberen Platte (6) in mehrere Stellungen zu ermöglichen, die immer auf einer querverlaufenden Ebene liegen, das heißt sie haben eine Querachse.
